# EUROPÄISCHE PATENTSCHRIFT

(11) **EP 3 263 381 B1**
(45) Veröffentlichungstag und Bekanntmachung des Hinweises auf die Patenterteilung: **14.11.2018**
(21) Anmeldenummer: 17177330.2
(22) Anmeldetag: 22.06.2017
(51) Int. Cl.: B60K 6/445, B60K 6/387

(54) **ANTRIEBSEINRICHTUNG FÜR EIN HYBRIDES KRAFTFAHRZEUG**
DRIVE DEVICE FOR A HYBRID VEHICLE
DISPOSITIF D'ENTRAÎNEMENT POUR UN VÉHICULE AUTOMOBILE HYBRIDE

(30) Priorität: 02.07.2016 DE 102016008173
(43) Veröffentlichungstag der Anmeldung: 03.01.2018
(73) Patentinhaber: AUDI AG, 85045 Ingolstadt (DE)
(72) Erfinder: Vollmer, Frank, 85049 Ingolstadt (DE)

(56) Entgegenhaltungen:
- DE-A1-102012 214 266
- DE-A1-102013 013 947
- DE-B3-102013 013 955
- DE-T5-112013 007 066

## Beschreibung

Die Erfindung betrifft eine Antriebseinrichtung für ein Kraftfahrzeug, mit einer Brennkraftmaschine, einer ersten elektrischen Maschine und einer zweiten elektrischen Maschine, wobei eine Antriebswelle der Brennkraftmaschine mittels einer ersten Kupplung mit einer Antriebswelle der ersten elektrischen Maschine koppelbar ist, die über eine Getriebeeinrichtung an eine Abtriebswelle der Antriebseinrichtung angeschlossen ist. Die zweite elektrische Maschine ist permanent mit der Abtriebswelle gekoppelt und die Getriebeeinrichtung weist ein permanent mit der Antriebswelle der ersten elektrischen Maschine gekoppeltes Planetengetriebe auf.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung verfügt über mehrere Antriebsaggregate, wobei die Brennkraftmaschine ein erstes der Antriebsaggregate, die erste elektrische Maschine ein zweites der Antriebsaggregate und die zweite elektrische Maschine ein drittes der Antriebsaggregate darstellt. Selbstverständlich können anstelle der Brennkraftmaschine, der ersten elektrischen Maschine und der zweiten elektrischen Maschine auch Antriebsaggregate anderer Art verwendet werden.

Bei einem Starten der Brennkraftmaschine muss diese zunächst auf eine Mindestdrehzahl gebracht werden, beispielsweise aus dem Stillstand heraus. Die Mindestdrehzahl entspricht dabei vorzugsweise einer Drehzahl, ab welcher die Brennkraftmaschine selbsttätig betrieben werden kann, also ohne das Antreiben der Brennkraftmaschine durch Anlegen eines externen Drehmoments. Ausgehend von dieser Mindestdrehzahl kann die Brennkraftmaschine weiter beschleunigen und ihre Drehzahl selbsttätig weiter erhöhen.

Zum Anschleppen der Brennkraftmaschine und insoweit dem Bereitstellen des externen Drehmoments wird die erste elektrische Maschine herangezogen. Zu diesem Zweck ist die Brennkraftmaschine beziehungsweise ihre Antriebswelle mit der ersten elektrischen Maschine beziehungsweise deren Antriebswelle mit Hilfe der ersten Kupplung koppelbar. Das bedeutet, dass in einer ersten Schaltstellung der ersten Kupplung die Wirkverbindung zwischen der Brennkraftmaschine und der ersten elektrischen Maschine unterbrochen ist, während sie in einer zweiten Schaltstellung zumindest teilweise hergestellt ist.

Besonders bevorzugt sind die Brennkraftmaschine und die erste elektrische Maschine in der zweiten Schaltstellung der ersten Kupplung starr miteinander gekoppelt. Mit Hilfe der ersten Kupplung ist insoweit die Antriebswelle der Brennkraftmaschine mit der Antriebswelle der ersten elektrischen Maschine wirkverbindbar beziehungsweise koppelbar, wobei diese beiden Begriffe im Rahmen dieser Beschreibung synonym verwendet werden. Alternativ oder zusätzlich ist die Brennkraftmaschine über die zweite Kupplung mit der ersten elektrischen Maschine koppelbar, wobei hierzu ein Verblocken des Planetengetriebes notwendig sein kann.

Weiterhin ist die erste elektrische Maschine beziehungsweise ihre Antriebswelle über die Getriebeeinrichtung an die Abtriebswelle der Antriebseinrichtung angeschlossen. Die Getriebeeinrichtung kann beispielsweise ein Mehrganggetriebe beziehungsweise ein Schaltgetriebe sein, mittels welcher ein aus einer Vielzahl von Übersetzungsverhältnissen ausgewähltes Übersetzungsverhältnis zwischen der Brennkraftmaschine und der Abtriebswelle einstellbar ist.

Beispielsweise liegt die Getriebeeinrichtung in Form eines Automatikgetriebes mit mehreren Gängen, beispielsweise wenigstens vier, wenigstens fünf, wenigstens sechs, wenigstens sieben oder wenigstens acht Vorwärtsfahrgängen vor. Eine derartige Ausgestaltung der Getriebeeinrichtung benötigt jedoch zum einen viel Bauraum in dem Kraftfahrzeug und ist zum anderen aufwendig zu realisieren.

Aus dem Stand der Technik ist die Druckschrift DE 11 2013 007 066 T5 bekannt. Das darin beschriebene Antriebssystem enthält: einen Leistungsverteilungsmechanismus mit einer Planetengetriebeeinheit, über welchen ein Hohlrad mit einer Verbrennungskraftmaschine verbunden ist, ein Sonnenrad mit einem ersten Motor-Generator verbunden ist und ein Träger mit einer Vorlegewelle verbunden ist, in einer Art und Weise, um Leistung übertragen zu können; einen Verriegelungsmechanismus, welcher das Sonnenrad verriegeln beziehungsweise arretieren kann; und einen Kupplungsmechanismus, welcher das Sonnenrad und das Hohlrad in Eingriff bringen kann. Die Verbrennungskraftmaschine, der Leistungsverteilungsmechanismus, der erste Motor-Generator, der Verriegelungsmechanismus und der Kupplungsmechanismus sind auf der gleichen Achse angeordnet. Der Verriegelungsmechanismus und der Kupplungsmechanismus sind auf einer gegenüberliegenden Seite der Verbrennungskraftmaschine angeordnet, wobei der Leistungsverteilungsmechanismus und der erste Motor-Generator zwischen diesen eingefügt sind.

Weiterhin ist aus dem Stand der Technik die Druckschrift DE 10 2012 214 266 A1 bekannt. Diese beschreibt einen Antriebsstrang, der ein Eingangselement, ein Ausgangselement, ein feststehendes Element und einen Motor-Generator aufweist. Der Antriebsstrang umfasst ein Hybridgetriebe mit einem ersten und einem zweiten Planetenradsatz. In manchen Ausführungsformen ist ein dritter Planetenradsatz hinzugefügt. Der Motor-Generator ist ständig zur gemeinsamen Rotation mit dem ersten Element des zweiten Planetenradsatzes verbunden. Ein erstes Verbindungselement verbindet das zweite Element des erste Planetenradsatzes ständig zur gemeinsamen Rotation mit dem dritten Element des zweiten Planetenradsatzes. Ein zweites Verbindungselement verbindet das dritte Element des ersten Planetenradsatzes ständig zur gemeinsamen Rotation mit dem zweiten Element des zweiten Planetenradsatzes. Ein Drehmomentübertragungsmechanismus ist selektiv einrückbar, um das erste Element des zweiten Planetenradsatzes zur gemeinsamen Rotation mit dem Eingangselement zu verbinden.

Es ist daher Aufgabe der Erfindung, eine Antriebseinrichtung für ein Kraftfahrzeug vorzuschlagen, welche gegenüber bekannten Antriebseinrichtungen Vorteile aufweist, insbesondere einen flexibleren Betrieb der Antriebseinrichtung bei gleichzeitig deutlich reduziertem Bauraum ermöglicht.

Die wird erfindungsgemäß mit einer Antriebseinrichtung mit den Merkmalen des Anspruchs 1 erzielt. Dabei ist vorgesehen, dass das Planetengetriebe mittels einer zweiten Kupplung mit der Antriebswelle der Brennkraftmaschine koppelbar ist, wobei die Antriebswelle der ersten elektrischen Maschine über eine dritte Kupplung mit einem Hohlrad des Planetengetriebes koppelbar ist, und wobei das Planetengetriebe in axialer Richtung bezüglich einer Drehachse der Antriebswelle gesehen zwischen der Brennkraftmaschine und der ersten elektrischen Maschine einerseits und der zweiten elektrischen Maschine andererseits angeordnet ist. Grundsätzlich ist vorgesehen, dass die Getriebeeinrichtung ein permanent mit der Antriebswelle der ersten elektrischen Maschine gekoppeltes und mittels einer zweiten Kupplung mit der Antriebswelle der Brennkraftmaschine koppelbares Planetengetriebe aufweist, wobei die zweite elektrische Maschine permanent mit der Abtriebswelle gekoppelt ist.

Die Getriebeeinrichtung weist das Planetengetriebe auf beziehungsweise ist als ein solches ausgestaltet. Das Planetengetriebe verfügt üblicherweise über ein Sonnenrad, einen Planetenträger sowie ein Hohlrad, wobei an dem Planetenträger wenigstens ein Planetenrad drehbar gelagert ist, welches einerseits mit dem Hohlrad und andererseits mit dem Sonnenrad kämmt. Die Antriebswelle der ersten elektrischen Maschine ist nun mit einem dieser Elemente, also beispielsweise dem Sonnenrad, dem Hohlrad oder dem Planetenträger, permanent gekoppelt, insbesondere starr gekoppelt. Die Kopplung zwischen der Getriebeeinrichtung und der Antriebswelle der ersten elektrischen Maschine erfolgt dabei vorzugsweise unmittelbar, also insbesondere nicht über ein weiteres Getriebe. Vielmehr kann das Element des Planetengetriebes unmittelbar mit der Antriebswelle verbunden beziehungsweise auf dieser angeordnet sein.

Die Antriebswelle der ersten elektrischen Maschine ist über die Getriebeeinrichtung an die Abtriebswelle der Antriebseinrichtung angeschlossen, insbesondere permanent. Vorzugsweise ist dies über das Planetengetriebe vorgesehen, insbesondere ausschließlich über das Planetengetriebe. Insoweit ist die Abtriebswelle beispielsweise permanent mit einem der Elemente des Planetengetriebes gekoppelt, während die erste elektrische Maschine permanent mit einem anderen der Elemente des Planetengetriebes gekoppelt ist. Dass die erste elektrische Maschine permanent über die Getriebeeinrichtung an die Abtriebswelle angeschlossen ist, bedeutet insoweit nicht, dass tatsächlich eine Wirkverbindung zwischen der ersten elektrischen Maschine und der Abtriebswelle vorliegt, insbesondere nicht permanent. In Abhängigkeit von einer Betriebsart der Antriebseinrichtung kann es wahlweise vorgesehen sein, dass durch entsprechendes Betreiben des Planetengetriebes kein Drehmoment zwischen der ersten elektrischen Maschine und der Abtriebswelle übertragen wird, also insoweit die Brennkraftmaschine von der Abtriebswelle entkoppelt ist, ohne dass Drehmoment übertragen wird.

Die Getriebeeinrichtung ist mittels der zweiten Kupplung mit der Antriebswelle der Brennkraftmaschine koppelbar. Das bedeutet, dass in einer ersten Schaltstellung der zweiten Kupplung die Getriebeeinrichtung von der Brennkraftmaschine beziehungsweise ihrer Antriebswelle entkoppelt und in einer zweiten Schaltstellung zumindest teilweise, vorzugsweise starr, mit ihr verbunden ist. Es kann vorgesehen sein, mittels Koppeln beziehungsweise Verbinden der Brennkraftmaschine mit der Antriebswelle ein Starten beziehungsweise Anschleppen der Brennkraftmaschine vorzunehmen. Analog zu den vorstehenden Ausführungen für die erste elektrische Maschine ist die Kopplung der Antriebswelle der Brennkraftmaschine mit dem Planetengetriebe über die zweite Kupplung derart ausgestaltet, dass sie mit einem Element des Planetengetriebes koppelbar ist, beispielsweise dem Sonnenrad, dem Planetenträger oder dem Hohlrad.

Vorstehend wurde bereits erläutert, dass die erste elektrische Maschine mittels der ersten Kupplung mit der Brennkraftmaschine koppelbar ist. Entsprechend kann die Brennkraftmaschine aufgrund der permanenten Kopplung der Getriebeeinrichtung mit der Antriebswelle der ersten elektrischen Maschine sowohl über die erste Kupplung als auch über die zweite Kupplung mit der Getriebeeinrichtung wirkverbunden beziehungsweise gekoppelt werden. Dies ist vorzugsweise unabhängig voneinander möglich, sodass also die Brennkraftmaschine beziehungsweise ihre Antriebswelle entweder nur über die erste Kupplung, nur über die zweite Kupplung oder sowohl über die erste Kupplung als auch die zweite Kupplung mit dem Planetengetriebe wirkverbunden sein kann.

Die Kopplung der Brennkraftmaschine mit der Getriebeeinrichtung über die erste Kupplung erfolgt dabei stets gemeinsam mit der ersten elektrischen Maschine, während mit Hilfe der zweiten Kupplung die Brennkraftmaschine unabhängig von der ersten elektrischen Maschine mit dem Planetengetriebe in Wirkverbindung gesetzt werden kann. Zusammenfassend ist es also mit Hilfe der ersten Kupplung und der zweiten Kupplung möglich, entweder sowohl die Brennkraftmaschine als auch die erste elektrische Maschine gemeinsam oder allein die erste elektrische Maschine, nicht jedoch die Brennkraftmaschine, mit dem Planetengetriebe zu koppeln.

Weiterhin ist es erfindungsgemäß vorgesehen, dass die zweite elektrische Maschine permanent mit der Abtriebswelle gekoppelt ist. Die zweite elektrische Maschine ist permanent, also unlösbar, mit der Abtriebswelle gekoppelt, vorzugsweise starr. Beispielsweise ist hierzu zwischen der zweiten elektrischen Maschine beziehungsweise einer Antriebswelle der zweiten elektrischen Maschine und der Abtriebswelle eine Getriebestufe vorgesehen. Die Getriebestufe weist lediglich ein einziges, nicht wechselbares Übersetzungsverhältnis auf, sodass das Übersetzungsverhältnis zwischen der zweiten elektrischen Maschine und der Abtriebswelle nicht veränderbar ist.

Vorzugsweise ist es vorgesehen, dass die Abtriebswelle starr und/oder permanent mit einer Radachse beziehungsweise wenigstens einem Rad des Kraftfahrzeugs gekoppelt ist. Diese Kopplung kann beispielsweise über wenigstens ein Differentialgetriebe, insbesondere ein Achsdifferentialgetriebe und/oder ein Mittendifferentialgetriebe, hergestellt sein. In der Wirkverbindung zwischen der Abtriebswelle und Radachse beziehungsweise dem Rad kann wenigstens eine Getriebestufe vorgesehen sein. Vorzugsweise ist jedoch das Übersetzungsverhältnis zwischen der Abtriebswelle und der Radachse beziehungsweise dem Rad nicht wechselbar, sondern vielmehr konstant.

Die Abtriebswelle kann mit der Radachse und/oder dem wenigstens einen Rad des Kraftfahrzeugs gekoppelt sein. Das wenigstens eine Rad des Kraftfahrzeugs liegt vorzugsweise an der Radachse vor. Beispielsweise weist die Radachse mehrere Teilachsen auf, wobei jeder der Teilachsen wenigstens ein Rad des Kraftfahrzeugs zugeordnet ist, insbesondere starr an der jeweiligen Radachse befestigt ist. Die Teilachsen der Radachse sind vorzugsweise über das vorstehend bereits erwähnte Achsdifferentialgetriebe mit der Abtriebswelle wirkverbunden.

Eine weitere Ausgestaltung der Erfindung sieht vor, dass die Antriebswelle der ersten elektrischen Maschine permanent mit einem Sonnenrad des Planetengetriebes gekoppelt ist. Das Sonnenrad stellt eines der vorstehend bereits erwähnten Elemente des Planetengetriebes dar. Die Antriebswelle ist nun permanent und vorzugsweise starr mit dem Sonnenrad wirkverbunden, insbesondere sitzt das Sonnenrad unmittelbar auf der Antriebswelle der ersten elektrischen Maschine.

Die Erfindung sieht vor, dass die Antriebswelle der ersten elektrischen Maschine über die dritte Kupplung mit dem Hohlrad des Planetengetriebes koppelbar ist. Zusätzlich zu der ersten Kupplung und der zweiten Kupplung ist also die dritte Kupplung vorgesehen. Über diese ist die Antriebswelle der ersten elektrischen Maschine mit dem Hohlrad des Planetengetriebes koppelbar. Das bedeutet, dass in einer ersten Schaltstellung der dritten Kupplung die Antriebswelle der ersten elektrischen Maschine von dem Hohlrad entkoppelt ist und in einer zweiten Schaltstellung zumindest teilweise, insbesondere starr, mit ihm gekoppelt ist. Entsprechend ist die erste elektrische Maschine beziehungsweise ihre Antriebswelle einerseits permanent mit dem Sonnenrad des Planetengetriebes gekoppelt und andererseits über die dritte Kupplung mit dem Hohlrad koppelbar. Unter Verwendung der dritten Kupplung kann insoweit das Planetengetriebe verblockt werden.

Eine bevorzugte weitere Ausführungsform der Erfindung sieht vor, dass die Antriebswelle der Brennkraftmaschine über die zweite Kupplung mit dem Hohlrad koppelbar ist. Bei geschlossener zweiter Kupplung, also bei Vorliegen der zweiten Schaltstellung der zweiten Kupplung, ist insoweit die Antriebswelle der Brennkraftmaschine vorzugsweise drehfest mit dem Hohlrad verbunden, sodass sie dieselbe Drehzahl aufweisen.

Eine weitere Ausgestaltung der Erfindung sieht vor, dass die Abtriebswelle mit einem Planetenträger des Planetengetriebes permanent gekoppelt ist. An dem Planetenträger ist, wie bereits vorstehend erwähnt, das wenigstens eine Planetenrad des Planetengetriebes drehbar gelagert und kämmt einerseits mit dem Hohlrad und andererseits mit dem Sonnenrad des Planetengetriebes. Der Planetenträger ist seinerseits drehbar gelagert, insbesondere ist er koaxial bezüglich des Sonnenrads und des Hohlrads drehbar gelagert. Der Planetenträger steht permanent mit der Abtriebswelle in Wirkverbindung, beispielsweise über eine Getriebestufe. Die Getriebestufe kann dabei dasselbe Übersetzungsverhältnis aufweisen wie ein eventuell zwischen der zweiten elektrischen Maschine und der Abtriebswelle vorgesehene Getriebestufe. Es kann jedoch auch ein anderes Übersetzungsverhältnis vorgesehen sein.

Im Rahmen einer weiteren Ausgestaltung der Erfindung ist vorgesehen, dass zwischen der Abtriebswelle und dem Planetenträger ein erstes Übersetzungsverhältnis und zwischen der Abtriebswelle und der Antriebswelle der zweiten elektrischen Maschine ein zweites Übersetzungsverhältnis vorgesehen ist. Hierauf wurde bereits hingewiesen. Die Übersetzungsverhältnisse können beispielsweise jeweils durch eine Getriebestufe erzielt werden. Auch eine direkte Kopplung kann jedoch vorgesehen sein.

In einer Weiterbildung der Erfindung ist vorgesehen, dass das zweite Übersetzungsverhältnis von dem ersten Übersetzungsverhältnis verschieden ist. Selbstverständlich kann alternativ jedoch auch das zweite Übersetzungsverhältnis gleich dem ersten Übersetzungsverhältnis sein.

Eine weitere Ausführungsform der Erfindung sieht vor, dass das Hohlrad mittels einer Bremse bremsbar ist. Die Bremse dient dem Bremsen des Hohlrads, beispielsweise bezüglich eines ortsfesten Gehäuses der Antriebseinrichtung, beispielsweise eines Maschinengehäuses der Brennkraftmaschine, der ersten elektrischen Maschine oder der zweiten elektrischen Maschine. In einer ersten Schaltstellung der Bremse ist das Hohlrad vorzugsweise vollständig freigegeben, während es in einer zweiten Schaltstellung gebremst oder vollständig festgesetzt ist.

Schließlich kann in einer weiteren Ausführungsform der Erfindung vorgesehen sein, dass die Antriebswellen der Brennkraftmaschine und der ersten elektrischen Maschine koaxial zueinander angeordnet sind. Die genannten Antriebsaggregate der Antriebseinrichtung sind insoweit in axialer Richtung benachbart, vorzugsweise teilweise sogar unmittelbar benachbart, zueinander angeordnet. Beispielsweise ist die erste elektrische Maschine der Brennkraftmaschine zugeordnet, insbesondere ist ein Maschinengehäuse der Brennkraftmaschine an einem Maschinengehäuse der ersten elektrischen Maschine befestigt.

Die zweite elektrische Maschine ist vorzugsweise in axialer Richtung beabstandet von der Brennkraftmaschine und der ersten elektrischen Maschine angeordnet. Gemäß der Erfindung ist - in axialer Richtung bezüglich einer Drehachse der Antriebswellen gesehen - die Getriebeeinrichtung beziehungsweise das Planetengetriebe zwischen der Brennkraftmaschine und der ersten elektrischen Maschine einerseits und der zweiten elektrischen Maschine andererseits, insbesondere zwischen den beiden elektrischen Maschine, angeordnet. Die zweite elektrische Maschine beziehungsweise ihre Antriebswelle kann ebenso koaxial zu den Antriebswellen der Brennkraftmaschine und der ersten elektrischen Maschine angeordnet sein. Vorzugsweise ist jedoch eine achsparallele Anordnung oder eine windschiefe Anordnung der Antriebswelle der zweiten elektrischen Maschine bezüglich den Antriebswellen von Brennkraftmaschine und erster elektrischer Maschine vorgesehen.

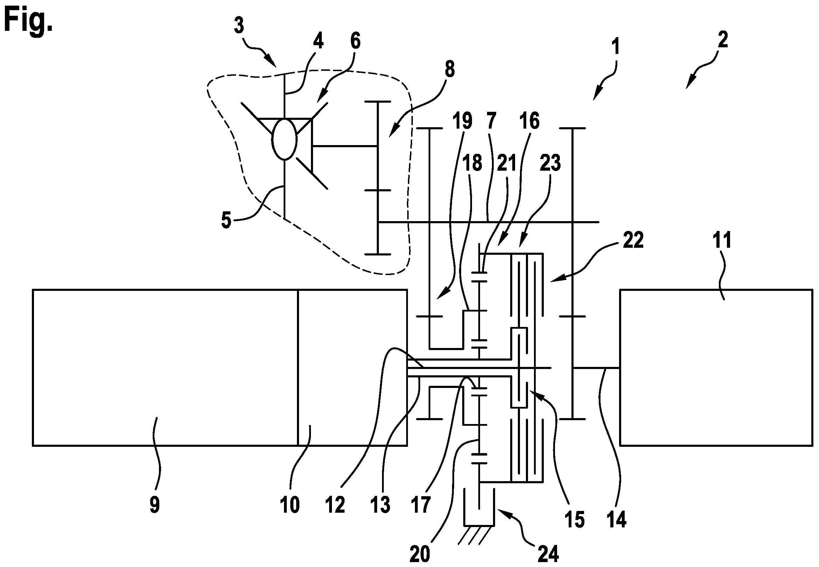

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug.

Die Figur zeigt eine schematische Darstellung einer Antriebseinrichtung 1 für ein nicht im Detail dargestelltes Kraftfahrzeug 2. Das Kraftfahrzeug 2 weist eine Radachse 3 mit zwei Teilachsen 4 und 5 auf, die über ein Achsdifferentialgetriebe 6 sowohl miteinander als auch mit einer Abtriebswelle 7 der Antriebseinrichtung 1 gekoppelt sind. Eine Wirkverbindung zwischen der Abtriebswelle 7 und dem Achsdifferentialgetriebe 6 ist dabei über eine Getriebestufe 8 hergestellt. Selbstverständlich kann jedoch auch eine direkte Kopplung vorgesehen sein.

Über die Abtriebswelle 7 kann die Antriebseinrichtung 1 ein Antriebsdrehmoment zum Antreiben des Kraftfahrzeugs 2 bereitstellen. Hierzu verfügt die Antriebseinrichtung 1 über eine Brennkraftmaschine 9, eine erste elektrische Maschine 10 und eine zweite elektrische Maschine 11. Die Brennkraftmaschine 9 weist eine Antriebswelle 12, die erste elektrische Maschine 10 eine Antriebswelle 13 und die zweite elektrische Maschine 11 eine Antriebswelle 14 auf. Die Antriebswellen 12 und 13 der Brennkraftmaschine 9 und der ersten elektrischen Maschine 10 sind mittels einer ersten Kupplung 15 miteinander koppelbar.

Bei geschlossener oder schlupfender Kupplung 15 kann insoweit die Brennkraftmaschine 9 zum Starten mittels der ersten elektrischen Maschine 10 angeschleppt werden, insbesondere auf eine Mindestdrehzahl der Brennkraftmaschine 9. Die erste elektrische Maschine 10 dient hierbei als Starter für die Brennkraftmaschine 9. Umgekehrt kann selbstverständlich die erste elektrische Maschine 10 als Generator betrieben und mittels der Brennkraftmaschine 9 angetrieben werden.

Die Antriebswelle 13 der ersten elektrischen Maschine 10 ist über eine Getriebeeinrichtung 16, welche ein Planetengetriebe aufweist oder als ein solches ausgestaltet ist, an die Abtriebswelle 7 angeschlossen. Hierbei ist ein Sonnenrad 17 des Planetengetriebes starr mit der Antriebswelle 13 der ersten elektrischen Maschine 10 verbunden, während die Abtriebswelle 7 mit einem Planetenträger 18 gekoppelt ist, beispielsweise über eine Getriebestufe 19. An dem Planetenträger 18 ist wenigstens ein Planetenrad 20 drehbar gelagert. Dies kämmt einerseits mit dem Sonnenrad 17 und andererseits mit einem Hohlrad 21 des Planetengetriebes. Zusammenfassend ist die Getriebeeinrichtung 16 beziehungsweise das Planetengetriebe permanent mit der Antriebswelle 13 der ersten elektrischen Maschine 10 verbunden beziehungsweise gekoppelt.

Zusätzlich zu der ersten Kupplung 15 ist eine zweite Kupplung 22 vorgesehen. Mittels dieser ist eine Wirkverbindung zwischen der Antriebswelle 12 der Brennkraftmaschine 9 und dem Planetengetriebe, insbesondere dem Hohlrad 21 des Planetengetriebes herstellbar. Mit Hilfe einer dritten Kupplung 23 ist zudem die Antriebswelle 13 der ersten elektrischen Maschine 10 mit dem Hohlrad 21 koppelbar. Bei geschlossener dritter Kupplung 23 sind insoweit sowohl das Sonnenrad 17 als auch das Hohlrad 21 mit der Antriebswelle 13 der ersten elektrischen Maschine 10 gekoppelt, sodass das Planetengetriebe verblockt ist. Eine Bremse 24 ermöglicht zudem das Bremsen des Hohlrads 21.

Mit Hilfe des beschriebenen Aufbaus der Antriebseinrichtung 1 ergeben sich folgende Betriebsarten: Mit Hilfe der ersten Kupplung 15 können die Antriebswellen 12 und 13 der Brennkraftmaschine 9 und der ersten elektrischen Maschine 10 zum Starten der Brennkraftmaschine 9, zum Durchführen eines hybridischen Betriebs der Antriebseinrichtung 1 oder zum Betreiben der Antriebseinrichtung 1 als serielle Hybridantriebseinrichtung 1 gekoppelt werden. Mit Hilfe der zweiten Kupplung 22, die die Brennkraftmaschine 9 beziehungsweise ihre Antriebswelle 12 mit dem Hohlrad 21 verbindet, kann ein drehzahlvariabler Betriebsbereich realisiert sein. Die dritte Kupplung 23 dient hingegen dem Verblocken des Planetengetriebes, sodass insoweit ein zweiter Fahrgang vorliegt. Wird das Hohlrad 21 mittels der Bremse 24 festgesetzt, so kann durch Schließen der ersten Kupplung 15 die Abtriebswelle 7 allein mittels der Brennkraftmaschine 9 angetrieben werden, wobei ein erster Fahrgang vorliegt, welcher ein von dem zweiten Fahrgang abweichendes Übersetzungsverhältnis aufweist.

Die beschriebene Antriebseinrichtung 1 weist eine äußerst kompakte Getriebeeinrichtung 16 auf, welche dennoch die Nutzung der Antriebseinrichtung 1 über den kompletten vorgesehenen Betriebsbereich des Kraftfahrzeugs ermöglicht. Insgesamt zeichnet sich die Antriebseinrichtung 1 also durch den geringen benötigten Bauraum sowie ihr geringes Gewicht und ihre dennoch hohe Flexibilität aus.

## Patentansprüche

1. Antriebseinrichtung (1) für ein Kraftfahrzeug (2), mit einer Brennkraftmaschine (9), einer ersten elektrischen Maschine (10) und einer zweiten elektrischen Maschine (11), wobei eine Antriebswelle (12) der Brennkraftmaschine (9) mittels einer ersten Kupplung (15) mit einer Antriebswelle (13) der ersten elektrischen Maschine (10) koppelbar ist, die über eine Getriebeeinrichtung (16) an eine Abtriebswelle (7) der Antriebseinrichtung (1) angeschlossen ist, wobei die zweite elektrische Maschine (11) permanent mit der Abtriebswelle (7) gekoppelt ist und die Getriebeeinrichtung (16) ein permanent mit der Antriebswelle (13) der ersten elektrischen Maschine (10) gekoppeltes Planetengetriebe aufweist, **dadurch gekennzeichnet, dass** das Planetengetriebe mittels einer zweiten Kupplung (22) mit der Antriebswelle (12) der Brennkraftmaschine koppelbar ist, wobei die Antriebswelle (13) der ersten elektrischen Maschine (10) über eine dritte Kupplung (23) mit einem Hohlrad (21) des Planetengetriebes koppelbar ist, und wobei das Planetengetriebe in axialer Richtung bezüglich einer Drehachse der Antriebswellen (12,13) gesehen zwischen der Brennkraftmaschine (9) und der ersten elektrischen Maschine (10) einerseits und der zweiten elektrischen Maschine (11) andererseits angeordnet ist.

2. Antriebseinrichtung nach Anspruch 1, **dadurch gekennzeichnet, dass** die Antriebswelle (13) der ersten elektrischen Maschine (10) permanent mit einem Sonnenrad (17) des Planetengetriebes gekoppelt ist.

3. Antriebseinrichtung nach einem der vorhergehenden Ansprüche, **dadurch gekennzeichnet, dass** die Antriebswelle (12) der Brennkraftmaschine (9) über die zweite Kupplung (22) mit dem Hohlrad (21) koppelbar ist.

4. Antriebseinrichtung nach einem der vorhergehenden Ansprüche, **dadurch gekennzeichnet, dass** die Abtriebswelle (7) mit einem Planetenträger (18) des Planetengetriebes permanent gekoppelt ist.

5. Antriebseinrichtung nach einem der vorhergehenden Ansprüche, **dadurch gekennzeichnet, dass** zwischen der Abtriebswelle (7) und dem Planetenträger (18) ein erstes Übersetzungsverhältnis und zwischen der Abtriebswelle (7) und der Antriebswelle (14) der zweiten elektrischen Maschine (11) ein zweites Übersetzungsverhältnis vorgesehen ist.

6. Antriebseinrichtung nach einem der vorhergehenden Ansprüche, **dadurch gekennzeichnet, dass** das zweite Übersetzungsverhältnis von dem ersten Übersetzungsverhältnisses verschieden ist.

7. Antriebseinrichtung nach einem der vorhergehenden Ansprüche, **dadurch gekennzeichnet, dass** das Hohlrad (21) mittels einer Bremse (24) bremsbar ist.

8. Antriebseinrichtung nach einem der vorhergehenden Ansprüche, **dadurch gekennzeichnet, dass** die Antriebswellen (12,13) der Brennkraftmaschine (9) und der ersten elektrischen Maschine (10) koaxial zueinander angeordnet sind.

## Claims

1. Drive device (1) for a motor vehicle (2), having an internal combustion engine (9), a first electric machine (10) and a second electric machine (11), wherein a drive shaft (12) of the internal combustion engine (9) can be coupled by a first coupling (15) to a drive shaft (13) of the first electric machine (10), which is connected via a transmission device (16) to an output shaft (7) of the drive device (1), wherein the second electric machine (11) is permanently coupled to the output shaft (7) and the transmission device (16) is provided with a planetary gear that is permanently coupled to the drive shaft (13) of the first electric machine (10), **characterised in that** the planetary gear can be coupled by a second coupling (22) to the drive shaft (12) of the internal combustion engine, wherein the drive shaft (13) of the first electric machine (10) can be coupled via a third coupling (23) to a ring wheel (21) of the planetary gear, and wherein the planetary gear is arranged in axial direction relative to an axis of rotation of the drive shafts (12, 13) between the internal combustion engine (9) and the first electric machine (10) on the one hand and the second electric machine (11) on the other hand.

2. Drive device according to claim 1, **characterised in that** the drive shaft (13) of the first electric machine (10) is permanently coupled to a sun wheel (17) of the planetary gear.

3. Drive device according to any of the preceding claims, **characterised in that** the drive shaft (12) of the internal combustion engine (9) can be coupled via the second coupling (22) to the ring wheel (21).

4. Drive device according to any of the preceding claims, **characterised in that** the output shaft (7) is permanently coupled to a planetary carrier (18) of the planetary gear.

5. Drive device according to any of the preceding claims, **characterised in that** a first transmission ratio is provided between the output shaft (7) and the planetary carrier (18), and a second transmission ratio is provided between the output shaft (7) and the drive shaft (14) of the second electric machine (11).

6. Drive device according to any of the preceding claims, **characterised in that** the second transmission ratio is different from the first transmission ratio.

7. Drive device according to any of the preceding claims, **characterised in that** the ring wheel (21) can be braked by means of a brake (24).

8. Drive device according to any of the preceding claims, **characterised in that** the drive shafts (12, 13) of the internal combustion engine (9) and the first electric machine (10) are arranged coaxially relative to one another.

## Revendications

1. Dispositif de propulsion (1) pour un véhicule automobile (2), avec un moteur à combustion interne (9), avec un premier moteur électrique (10) et avec un second moteur électrique (11), dans lequel un arbre d'entraînement (12) du moteur à combustion interne (9) peut être couplé au moyen d'une première liaison (15) à un arbre d'entraînement (13) du premier moteur électrique (10) qui est raccordé par l'intermédiaire d'un dispositif de transmission (16) à un arbre de sortie (7) du dispositif de propulsion (1) et dans lequel le second moteur électrique (11) est couplé en permanence à l'arbre de sortie (7) et le dispositif de transmission (16) comporte un engrenage planétaire couplé en permanence à l'arbre d'entraînement (13) du premier moteur électrique (10), **caractérisé en ce que** l'engrenage planétaire peut être couplé au moyen d'une deuxième liaison (22) à l'arbre d'entraînement (12) du moteur à combustion interne, dans lequel l'arbre d'entraînement (13) du premier moteur électrique (10) peut être couplé par l'intermédiaire d'une troisième liaison (23) à une couronne (21) de l'engrenage planétaire et dans lequel, vu dans une direction axiale par rapport à un axe de rotation des arbres moteurs (12, 13), l'engrenage planétaire est agencé entre le moteur à combustion interne (9) et le premier moteur électrique (10) d'une part et le second moteur électrique (11) d'autre part.

2. Dispositif de propulsion selon la revendication 1, **caractérisé en ce que** l'arbre d'entraînement (13) du premier moteur électrique (10) est couplé en permanence à une roue solaire (17) de l'engrenage planétaire.

3. Dispositif de propulsion selon l'une quelconque des revendications précédentes, **caractérisé en ce que** l'arbre d'entraînement (12) du moteur à combustion interne (9) peut être couplé par l'intermédiaire de la deuxième liaison (22) à la couronne (21).

4. Dispositif de propulsion selon l'une quelconque des revendications précédentes, **caractérisé en ce que** l'arbre de sortie (7) est couplé en permanence à une cage de transmission planétaire (18) de l'engrenage planétaire.

5. Dispositif de propulsion selon l'une quelconque des revendications précédentes, **caractérisé en ce qu'**un premier rapport de transmission est prévu entre l'arbre de sortie (7) et la cage de transmission planétaire (18) et un second rapport de transmission est prévu entre l'arbre de sortie (7) et l'arbre d'entraînement (14) du second moteur électrique (11).

6. Dispositif de propulsion selon l'une quelconque des revendications précédentes, **caractérisé en ce que** le second rapport de transmission est différent du premier rapport de transmission.

7. Dispositif de propulsion selon l'une quelconque des revendications précédentes, **caractérisé en ce que** la couronne (21) peut être freinée au moyen d'un frein (24).

8. Dispositif de propulsion selon l'une quelconque des revendications précédentes, **caractérisé en ce que** les arbres moteurs (12, 13) du moteur à combustion interne (9) et du premier moteur électrique (10) sont agencés coaxiaux l'un par rapport à l'autre.
